# EUROPEAN PATENT APPLICATION

(11) **EP 1 271 045 A2**
(43) Date of publication of application: **02.01.2003**
(21) Application number: 02380085.7
(22) Date of filing: 17.04.2002
(51) Int. Cl.: F16M 11/12

(54) **Door-opener video camera adjustable support**

(30) Priority: 18.06.2001 ES 200101577 U
(71) Applicant: Guinaz, S.L., 31350 Peralta (Navarra) (ES)
(72) Inventor: Guindualin Azcona, Alfonso, 31350 Peralta, Navarra (ES)
(74) Representative: Ungria Lopez, Javier

(57) **Abstract**

Adjustable support for a door opener video camera, being the type of door opener video camera installed in the street plates of automatic door openers enabling the person calling who wants to enter the home, premises or establishment to be visually identified, with the support comprising a box, defined by two half-bodies (2) and (3) in which all the components are grouped, and with a first box half-body (2) displaying a housing (5) inside, generally tubular in shape, in which a spherical segment (8) is housed, generally hollow spherical in shape cut by two parallel planes which take a support (7), generally tubular in shape, which houses the actual camera itself inside, and the support (7) is secured to an element (11), quadrangular in plan, whilst the second box half-body (3) displays a centre orifice (12) on its outside face.

## Description

### OBJECT OF THE INVENTION

As expressed in the title of this descriptive report, the following Utility Model refers to an adjustable support for a door opener video camera, being the type of door opener video camera installed in the street plates of automatic door openers enabling the person calling who wants to enter the called home, premises or establishment to be visually identified, so that the camera bearing support being presented can be adjusted vertically and horizontally, allowing the field of vision to be widened and therefore facilitating its adaptability in its installation.

Thus when fitting the pertinent door opener street plate incorporating a camera for picturing people calling, the positioning of the camera support will be adjusted towards the most convenient point.

### FIELD OF THE INVENTION

The door opener video camera adjustable support is applicable for fitting in automatic door opener street plates so that the camera support is adjusted in its installation to focus the camera towards the moist advisable point for facilitating the identification of persons making calls who want to enter inside to be allowed access once visually identified.

### BACKGROUND OF THE INVENTION

With the passing of time, the construction structure of buildings has evolved as a consequence of the technological advance made, and this has led to access thereto likewise evolving and there is no similarity between resources used beforehand and those used nowadays.

Thus, modern automatic door openers, even fitted with a camera for viewing and not only verbally but visually identifying people making calls with the purpose of allowing them to enter inside, are in no way similar to the mechanical means used years ago or the simple "bells" most used in detached houses.

In this way, when the street plate of a camera bearing automatic door opener is fitted, the camera support is arranged in the best position for the camera to focus most suitably towards the position in which it is expected that people will place themselves to make the call, with the purpose of obtaining the best possible picture.

It must therefore be possible to adjust the camera support, but in the conventional fashion, the problem arises of the camera being mounted on a swivel support in a vertical plane, endeavouring to absorb the differences in height at which the street plate may be fitted, but with its adjustment not being possible in a vertical plane.

### DESCRIPTION OF THE INVENTION

This descriptive report presents an adjustable support for a door opener video camera, being the type of door opener video camera installed in the street plates of automatic door openers enabling the person calling who wants to enter the called home, premises or establishment to be visually identified, which comprises a box, defined by two half-bodies in which all the components are grouped, and a first box half-body displays a housing on its inside, generally tubular in shape, fitted with a pair of half-round cross section protuberances, according to respective diametrically opposite generatrices, which housing narrows on the outside and inside displays a series of small annular protuberances so that a piece is located in such housing, generally spherical in shape, cut by two parallel planes, and fitted on its outside surface with a pair of pivots, diametrically opposite, in which piece it takes a support, generally cylindrical in shape, which houses the actual camera itself, and the support housing the camera is secured to an element which, on its other side, displays a central pivot, whilst the second box half-body displays a centre orifice through which the pivot of the element secured to the camera bearing support is accessible for hand adjusting.

The piece, generally hollow spherical in shape, which takes the camera support is cut by a pair of parallel planes, defining two open bases of different diameters, with both cuts being made with respect to the respective half spheres defined by a diametral central plane parallel to both cuts, according to parallel planes.

The piece taking the camera support displays radial ribs defining the positioning for the camera bearing support and the camera is positioned open at its smaller base and the piece taking the camera support is located in the housing of the first box half-body with its pivots fitting into the half round section protuberances of the housing and the smaller open base of the piece is positioned in relation to the outside of the box half-body, which is closed off by a transparent cover.

The camera bearing support is secured to an element, generally quadrangular in shape, fitted with a handling pivot for adjustment, with an electronic operating component carrying plate being positioned between.

The pivot of the element secured to the camera bearing support when the two box half-bodies are joined and closed, is accessible through the centre orifice of the second box half-body which displays an orifice in the centre.

Thus the camera bearing support can be adjusted by means of the piece taking it in the fashion of a ball joint, increasing the field of vision and facilitating its adaptability to any door opener street plate regardless of the positioning height and place.

To supplement the description which will be given hereafter, and with the purpose of aiding in a better understanding of the features of the invention, this descriptive report is accompanied by a set of drawings, in whose figures the most characteristic details of the invention are shown in an illustrative but not limiting fashion.

### BRIEF DESCRIPTION OF THE DRAWINGS

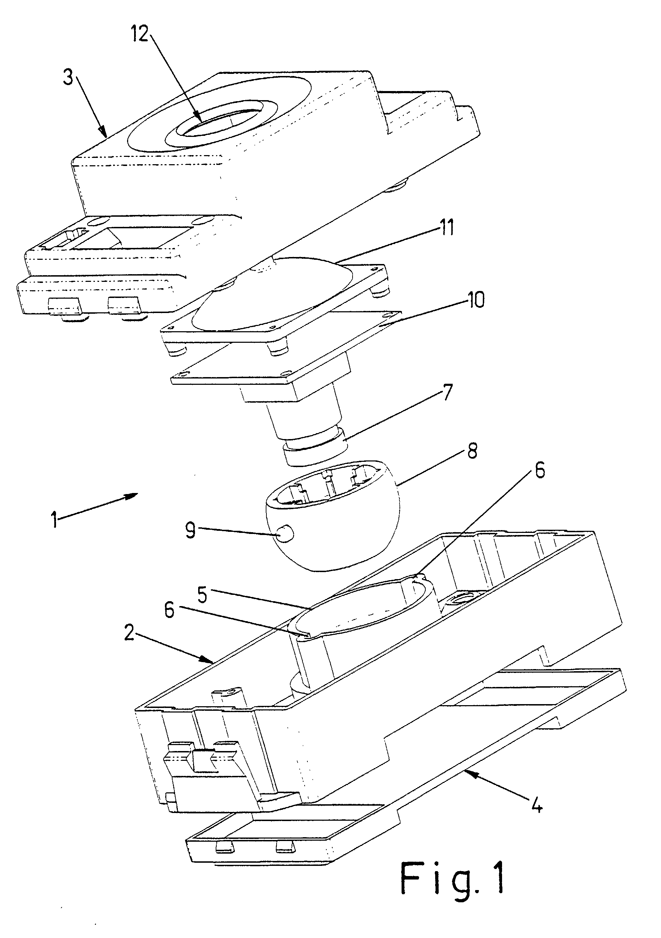

Figure 1. Shows a perspective view of the overall camera support which comprises a box, in two half-bodies, for housing the different components which can be seen ready for assembly perfectly connected, with the two halves of the box being closed and joined by screws.

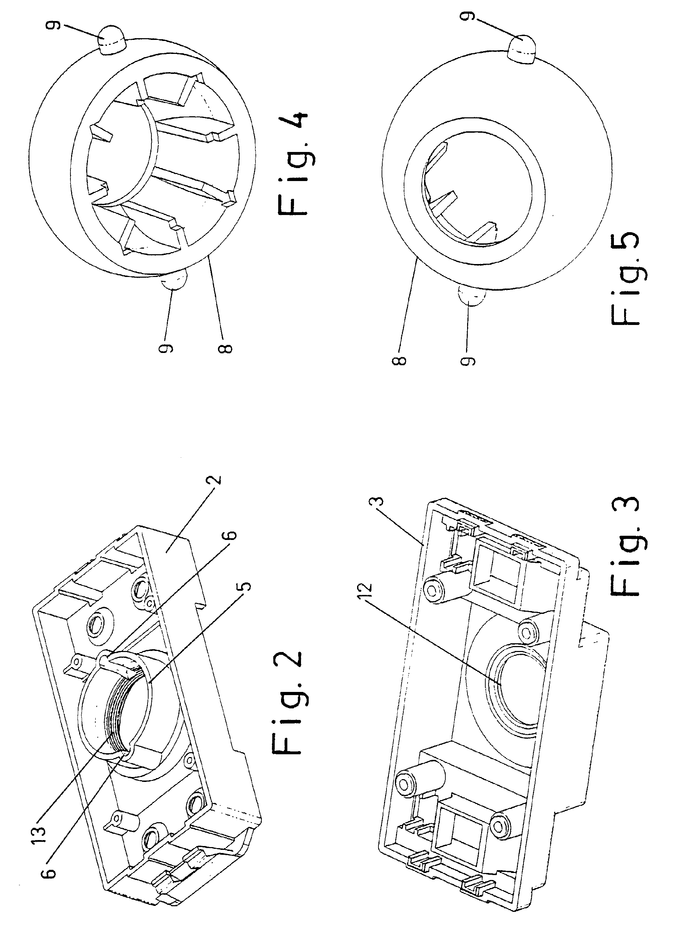

Figure 2. Shows a perspective view of the inside of a first box half-body in which a housing is defined for locating a piece in whose inside the camera bearing support is taken, which first box half-body is closed at the front by a transparent material cover.
Figure 3. Shows a perspective view of the inside of the second box half-body, which is provided with a centre orifice through which a camera bearing support handling pivot will pass.
Figure 4. Shows a perspective view of the piece taking the actual camera bearing support, which piece displays a generally hollow spherical shape cut by two parallel planes and fitted on its outside with a pair of small diametrically opposite protuberances.
Figure 5. Shows a second perspective view of the camera bearing support taking piece, relative to the foregoing figure, which displays a generally hollow spherical shape sectioned by two parallel planes and fitted on its outside surface with a pair of diametrically opposite protuberances.

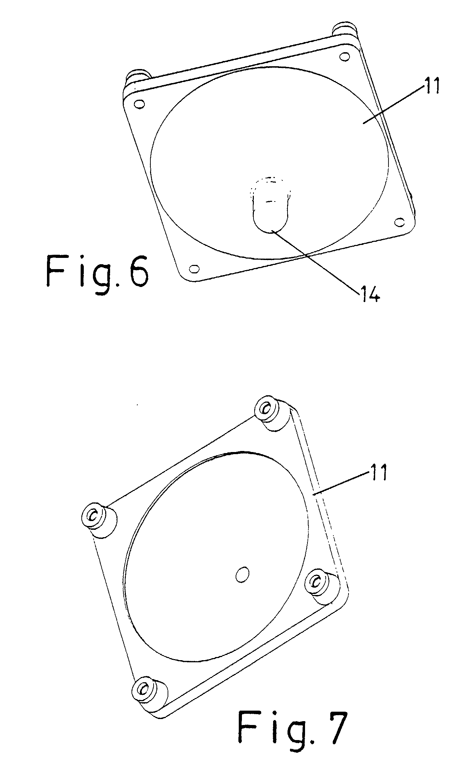

Figure 6. Shows a perspective view of the element secured to the camera bearing support which carries the manual handling pivot for adjusting the camera when installing same.
Figure 7. Shows a second perspective view of the element secured to the camera bearing support, which carries the handling pivot for adjusting the camera.

### DESCRIPTION OF AN EMBODIMENT OF THE INVENTION

In the light of the figures discussed and in accordance with the numbering as adopted, we can see how the support comprises a box, defined by two half-bodies 2 and 3, in which the components are grouped, with a first box half-body 2 displaying on its inside a housing 5, generally tubular in shape, fitted with a pair of diametrically opposite projections 6 with a half tubular cross section, according to respective generatrices, which housing 5 displays on its outside base a progressive narrowing and inside displays a series of small annular protuberances 13.

A spherical segment 8 (a piece spherical in shape, sectioned by two parallel planes), which define two open bases and provided on its outside surface with a pair of diametrically opposite pivots 9, is located in housing 5, generally tubular in shape, materialized in the first box half-body 3.

In turn, piece 8 takes a support 7, generally tubular in shape, which houses the camera itself inside, and the said support 7 is secured to an element 11, quadrangular in plan, which, on its other side, shows a pivot 14 in a central position.

Moreover, the second box half-body 3 displays on its outside, a central orifice 12 and when joined and closed with the first box half-body, they contain all the support components.

Spherical segment 8, which takes the camera bearing support 7 and which is cut by a pair of parallel planes, defines two open bases of different diameter, with both cuts being made with respect to their respective half-spheres defined by a central diametral plane parallel to both sectioned parts.

In addition, spherical segment 8 inside shows radial ribs defining the positioning of the tubular camera bearing support 7 and the camera is positioned open with respect to its smaller base and piece 8 is located in the housing 5 of the first box half-body 2, and its pivots 9 fit into the protuberances 6, with a half tubular cross section, of housing 5, with the smaller open base of piece 8 being positioned in relation to the outside face of the first box half-body 2, which is closed by a transparent cover 4.

The camera bearing support 7 is secured to the element 11 with an operating electronic component bearing plate 10 placed between.

Pivot 14 of the element 11 secured to camera bearing support 7 is accessible through the central orifice 12 of the box half-body 3 when the two half-bodies 2 and 3 are joined and closed.

Spherical segment 8 is perfectly positioned in housing 5 as it is supported on the series of small annular protuberances 13.

## Claims

1. **DOOR OPENER VIDEO CAMERA ADJUSTABLE SUPPORT,** being the type of door opener video camera installed in plates of automatic door openers in streets, enabling to visually identify a person who is calling for coming in a home, premises or establishment, **characterized in that** the door opener video camera adjustable support comprises a box where all components are located, said box comprising a first box half-body (2) and a second box half-body (3); the first box half-body (2) comprising in its internal face a generally tubular-shaped housing (5) provided with:
a pair of half-tubular-shaped projections (6) according to respective diametrically opposite generatrices,
a progressive narrowing with respect to an external base of said housing (5), and
a plurality of small annular protuberances (13);
said housing (5) therefore being enabled to house
a hollow generally spherical segment (8) provided with a pair of diametrically opposite pivots (9) in the external surface of said spherical segment (8);
said spherical segment (8) housing in turn,
a generally tubular shaped support (7) provided in turn to house a video camera;
said support (7) being secured to a quadrangular plan element (11) provided in a central position, with a pivot (14) on an opposite side of the support (7);
while the second box half-body (3) is provided in an external face with a central orifice (12).

2. **DOOR OPENER VIDEO CAMERA ADJUSTABLE SUPPORT** according to claim 1, **characterized in that** the spherical segment (8) is limited by two open bases with different diameter, between which the pivots (9) are placed in a central plane parallel to the planes defining said bases.

3. **DOOR OPENER VIDEO CAMERA ADJUSTABLE SUPPORT** according to any of claims 1 and 2, **characterized in that** the spherical segment (8) is provided inside with radial ribs in order to fit the support (7) containing the video camera placed in an smaller open base of said support (7), located within the spherical segment (8) which is located in turn within the housing (5) belonging to the first box half-body (2), by means of fitting the pivots (9) within the projections (6); the smaller open base of the spherical segment (8) therefore being placed according to an external face of the first box half-body (2) and being provided with a transparent plate (4).

4. **DOOR OPENER VIDEO CAMERA ADJUSTABLE SUPPORT** according to claim 1, **characterized in that** the support (7) for housing the video camera, is secured to the element (11) by means of interposing a plate (10) carrying functional electronic components.

5. **DOOR OPENER VIDEO CAMERA ADJUSTABLE SUPPORT** as the foregoing claims, **characterized in that** the pivot (14) belonging to the element (11) which is secured to the support (7) where the video camera is placed, is accessible through the central orifice (12) of the second box half-body (3), when joining and closing both box half-bodies (2) and (3).
